(19) **Europäisches Patentamt**

**European Patent Office**

**Office européen des brevets**

(11) **EP 0 777 993 B1**

(12) **FASCICULE DE BREVET EUROPEEN**

(45) Date de publication et mention
de la délivrance du brevet:
**19.02.2003 Bulletin 2003/08**

(51) Int Cl.⁷: **A47J 37/08**

(21) Numéro de dépôt: **96203306.4**

(22) Date de dépôt: **25.11.1996**

(54) **Appareil pour griller un produit**

Grillgerät

Grilling device

(84) Etats contractants désignés:
**DE ES FR GB IT**

(30) Priorité: **06.12.1995 FR 9514420**

(43) Date de publication de la demande:
**11.06.1997 Bulletin 1997/24**

(73) Titulaire: **Koninklijke Philips Electronics N.V.**
**5621 BA Eindhoven (NL)**

(72) Inventeurs:
• **Hazan, Jean-Pierre**
**75008 Paris (FR)**

• **Nagel, Jean-Louis**
**75008 Paris (FR)**

• **Gourrier, Serge**
**75008 Paris (FR)**

(74) Mandataire: **Landousy, Christian et al**
**Société Civile S.P.I.D.**
**156, Boulevard Haussmann**
**75008 Paris (FR)**

(56) Documents cités:
**FR-A- 2 569 969        GB-A- 2 289 210**
**US-A- 4 976 194**

**Description**

L'invention concerne un appareil pour griller un produit comportant:

- des moyens de chauffage,
- des moyens de commande pour commander les moyens de chauffage,
- des moyens de temporisation pour opérer un contrôle temporaire des moyens de commande,
- des moyens de détection pour suivre des variations d'un état de grillé du produit au cours du grillage et pour délivrer au moins un signal de commande actionnant les moyens de temporisation lorsqu'au moins un seuil d'état de grillé est atteint.

Un tel appareil est décrit dans le document FR-A-2 569 969.

Un grille-pain est essentiellement composé de moyens de chauffage (résistance chauffante ou éléments à infra-rouge), d'un compartiment destiné à recevoir des tranches de pain et de moyens de commande pour arrêter les moyens de chauffage lorsque le pain a atteint un degré de grillé suffisant.

Le problème qui se pose dans l'utilisation d'un grille-pain réside dans le contrôle de l'état de grillé du pain au cours du grillage du pain. La coloration atteinte doit être ni trop brune ni trop claire. Différentes solutions ont été fournies mais elles ne résolvent que partiellement ce problème.

Certains appareils disposent de moyens de contrôle, réglables par l'utilisateur, qui permettent de régler la durée de mise en fonctionnement des moyens de chauffage. L'utilisateur peut ainsi, à partir d'essais successifs, régler à sa convenance l'état de grillé du pain.

Des appareils plus récents mesurent le rayonnement émis par la surface du pain durant le grillage du pain pour en déduire un état de grillé et intervenir sur les moyens de chauffage. Sur ce principe, le document US 4 976 194 propose un grille-pain pouvant servir à la fois à griller du pain et à réchauffer des produits placés sur sa partie supérieure. Pour ce qui concerne l'invention, ce document révèle un dispositif de commande qui détecte l'état de grillé du pain et qui arrête le grillage du pain lorsqu'un seuil d'état de grillé est atteint.

Mais un tel dispositif de commande est insuffisant pour obtenir une qualité de grillé reproductible quels que soient les types de pains et leurs caractéristiques:

- composition, consistance et coloration initiales (blanc, bis, noir),
- température initiale (pain à température ambiante, pain froid, pain congelé),
- teneur en eau,
- épaisseur du pain à griller.

En effet, la relation entre le rayonnement émis par le pain et sa température est fonction de son émissivité qui elle-même dépend de tous ces paramètres, ce qui rend assez aléatoire la qualité de grillé ainsi obtenue.

Le but de l'invention est d'obtenir un pain grillé de qualité beaucoup plus reproductible malgré l'influence de ces différents paramètres initiaux.

Ce but est atteint avec un appareil du type défini dans le premier paragraphe, pour lequel les moyens de détection comportent un capteur de température qui mesure une température du produit, les moyens de détection comportant un premier moyen de comparaison pour délivrer un premier signal de commande mettant en route les moyens de temporisation lorsque la température du produit est supérieure à une température prédéterminée déterminant un premier seuil d'état de grillé.

De cette manière, les moyens de temporisation ne sont enclenchés que lorsque le pain a atteint une température suffisante en réel rapport avec le démarrage effectif du grillage. Ceci permet de réduire considérablement l'influence des disparités des paramètres tels que la température initiale du pain, le poids, le degré initial d'humidité par exemple. Ceci définit avec plus de précision qu'auparavant le moment de départ du grillage, c'est-à-dire le moment pour commencer un suivi précis de l'étape de grillage proprement dite, le grillage n'étant effectif que lorsque la température du pain est suffisamment élevée. Ce premier seuil de température constitue une température de démarrage de l'action des moyens de temporisation. A cet instant, les moyens de commande sont alors placés temporairement sous le contrôle des moyens de temporisation au cours d'une période finale durant laquelle apparaît l'essentiel du grillage.

Pour tenir compte du fait que les produits à griller comportent le plus souvent une quantité non négligeable d'eau, la température de démarrage est choisie légèrement supérieure à 100 °C. De la sorte une grande partie de l'eau contenue notamment en surface d'une tranche de pain a pu être évaporée au cours de la période initiale de chauffage et le coeur de la tranche de pain, même très froid, se trouve ainsi considérablement réchauffé.

A l'apparition du premier signal de commande, les moyens de temporisation vont accomplir des actions au cours de la période finale de grillage. La durée de la période finale peut être déterminée de deux manières.

Selon un premier mode, la durée de la période finale est définie temporellement par les moyens de temporisation eux-mêmes qui déterminent l'achèvement de la période finale lorsqu'une durée prédéterminée s'est écoulée. Les moyens de temporisation fixent l'instant d'arrêt des moyens de chauffage. Le processus de grillage se produit au cours de la période finale de temps, avec ou sans changement de puissance de chauffe. Il peut s'agir d'une réduction de puissance de chauffe. La durée de la période finale peut être prévue à l'avance ou réglable par l'utilisateur pour lui permettre d'adapter le grillage à ses goûts personnels. L'utilisateur dispose pour cela d'un moyen de réglage.

Pour cela, les moyens de temporisation comportent un compteur, enclenché par le premier signal de commande, le compteur mesurant une durée de contrôle temporaire, les moyens de temporisation délivrant aux moyens de commande un signal de coupure lorsque la durée de contrôle temporaire a atteint un durée prédéterminée déterminant la fin du grillage.

Selon un second mode, la puissance de chauffe est systématiquement modifiée à l'apparition du premier signal de commande, le processus de grillage continuant jusqu'à ce que le pain ait atteint une autre température prédéterminée. Alors, les moyens de détection comportent un second moyen de comparaison pour délivrer un second signal de commande lorsque la température du produit atteint une seconde température prédéterminée déterminant un second seuil d'état de grillé, les moyens de temporisation délivrant aux moyens de commande, d'une part, un signal de changement d'allure de chauffe en réponse au premier signal de commande et, d'autre part, un signal de coupure en réponse au second signal de commande pour arrêter les moyens de chauffage.

Cette seconde température prédéterminée, dite température d'arrêt, est située dans la gamme de températures allant de 180°C à 200 °C environ.

Dans le second mode, l'apparition du signal de changement d'allure de chauffe entraîne automatiquement la réduction de la puissance au cours de la période finale. Cette réduction de puissance peut être faite soit par paliers, soit continûment. Ceci permet de contrôler plus finement l'étape décisive au cours de laquelle le grillage du pain se déroule. En effet, la période finale est celle au cours de laquelle se déroule en majeure partie le processus de grillage. Il est donc souhaitable de contrôler finement le déroulement des opérations au cours de cette période. Pour que le processus de grillage ne s'opère pas trop rapidement, ce qui aurait pour conséquence de le rendre moins maîtrisable, on modifie l'allure de chauffe au début ou au cours de la période finale. Ceci permet d'être plus tolérant sur l'instant d'arrêt des moyens de chauffage et d'éviter ainsi de brûler le pain, les mécanismes de grillage ayant tendance à s'emballer en fin de grillage. Cette tolérance sur l'instant d'arrêt est importante en cas d'erreur de mesure de température. Cette erreur peut notamment être due au fait que la zone servant à la mesure est une partie seulement de la surface de la tranche de pain. D'autre part, l'erreur de mesure de température a des conséquences plus importantes lorsque la température du pain est élevée et lorsque la puissance de chauffe est importante. Une maîtrise fine des mécanismes de grillage du pain est donc primordiale.

Dans les deux modes, l'arrêt des moyens de chauffage est établi par les moyens de temporisation qui délivrent aux moyens de commande un signal de coupure pour arrêter le chauffage.

Préférentiellement, on utilise un capteur de température sans contact qui se sert du rayonnement infra-rouge émis par la surface du pain. Pour s'affranchir des variations d'émissivité du pain, préférentiellement les moyens de détection opèrent par détermination d'un équilibre entre les flux échangés entre le capteur et le produit à griller.

Lorsque le pain à griller est encore congelé, il est possible de prévoir que l'appareil commence par contrôler la décongélation du pain avant de procéder à son grillage. Pour cela, les moyens de détection comportent un troisième moyen de comparaison pour délivrer un troisième signal de commande présentant deux états de manière à contrôler une décongélation du produit, les moyens de temporisation étant tels qu'ils sont mis en route par le premier état lorsque la température du produit est inférieure à 0 °C et sont tels qu'ils sont arrêtés par le second état lorsque la température du produit est au-delà de 0°C.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1 : un schéma des éléments essentiels d'un grille-pain selon l'invention.
Figure 2 : deux courbes indiquant les variations de températures de deux tranches de pain ayant des températures initiales différentes.
Figure 3 : une coupe d'un capteur de température opérant sans contact.
Figure 4 : un schéma des moyens de détection délivrant, à partir de la mesure de la température de surface du pain, les différents signaux de commande.
Figure 5 : un schéma montrant les éléments essentiels d'un grille-pain équipé d'un capteur de température venant en contact avec le pain.
Figure 6 : un schéma détaillé de la disposition du capteur destiné à être mis en contact avec le pain dans le cas de la figure 5.

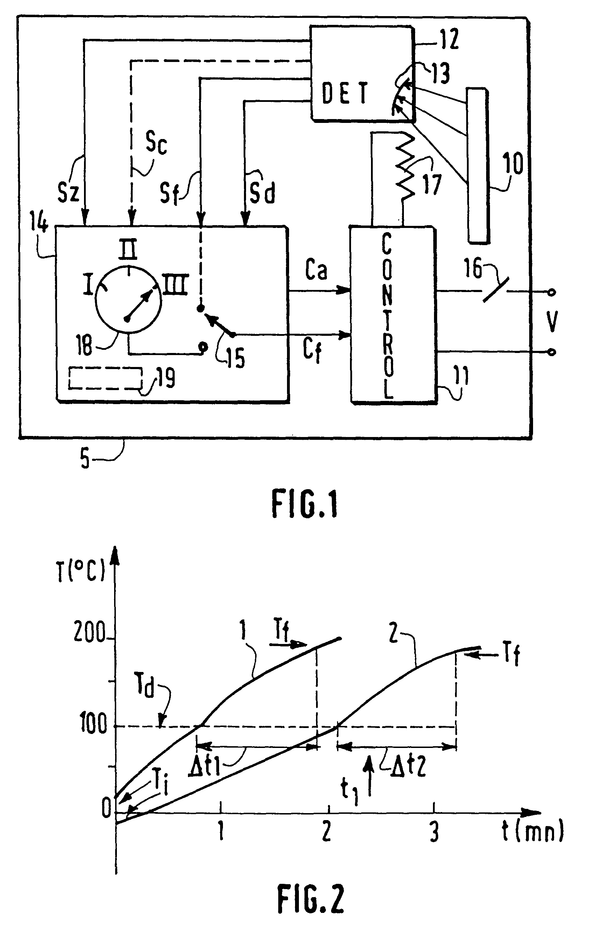

La figure 1 représente un appareil 5 pour griller un produit 10, par exemple un grille-pain. Il comporte des moyens de chauffage 17, par exemple des résistances chauffantes ou des éléments à chauffage par infra-rouge. Le fonctionnement de ces moyens de chauffage est commandé par des moyens de commande CONTROL 11 qui sont connectés à une alimentation électrique V à travers un interrupteur 16. Des moyens de détection 12 permettent de suivre les variations de la température d'un produit 10, par exemple une tranche de pain.

Selon l'invention, les moyens de détection comportent un capteur de température 13 qui mesure avec ou sans contact la température de surface du pain. Des moyens de temporisation 14 sont disposés entre les moyens 12 de détection et les moyens 11 de commande.

Lors de la mise sous tension du grille-pain, l'interrupteur 16 est enclenché, ce qui permet aux moyens 11 de commande de mettre en chauffe les moyens 17 de chauffage au cours de la période initiale. La tranche de pain est alors soumise au rayonnement des moyens de chauffage, ce qui entraîne une élévation de la température de la tranche de pain, élévation qui est mesurée par le capteur 13 de température. Lorsque la température du pain atteint une première température prédéterminée Td, préférentiellement légèrement supérieure à 100 °C, les moyens 12 de détection délivrent un premier signal de commande Sd aux moyens 14 de temporisation qui démarrent alors la détermination de la durée de la période finale pendant laquelle les moyens de temporisation assurent le contrôle des moyens 11 de commande. Cette prise de contrôle se termine à la fin de la période finale.

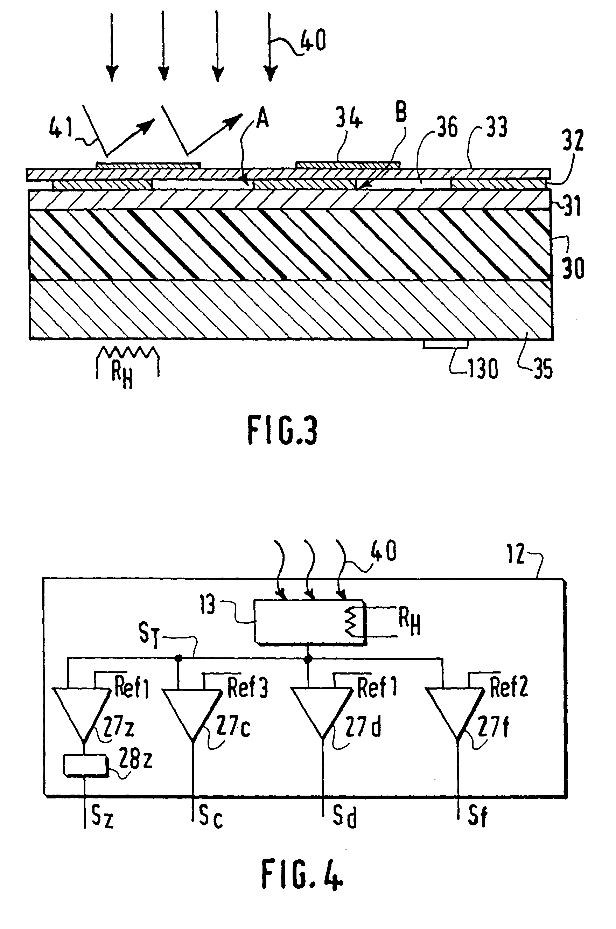

Le capteur de température 13 est inclus dans les moyens de détection 12 qui sont représentés sur la figure 4. Le capteur 13 délivre un signal $S_T$ qui est comparé à une référence Ref1 dans un comparateur 27d. Les moyens de détection déterminent quand le signal $S_T$ est égal à la référence Ref1 et délivrent alors le signal de commande Sd. Cette référence peut être formée par un tension de référence ou par une valeur mise en mémoire dans une mémoire électronique.

Selon le premier mode, la fin de la période finale est déterminée temporellement par les moyens de temporisation eux-mêmes. Ils disposent pour cela d'un compteur 19 qui mesure le temps écoulé depuis l'instant d'apparition du premier signal de commande et détermine la fin de la période finale. La durée prédéterminée de la période finale peut être modifiée par l'utilisateur à l'aide de moyens de réglage, par exemple un bouton 18. Au cours de la période finale, la puissance électrique dissipée dans les éléments chauffants peut être réduite pour éviter que le processus de grillage ne s'emballe. Ceci est plus sensible à l'approche de la fin de l'opération de grillage. La puissance peut être réduite par exemple progressivement ou par paliers successifs ou selon d'autres lois de variation. La durée prédéterminée est définie d'après les caractéristiques spécifiques au grille-pain: disposition des éléments chauffants, disposition de la tranche de pain, structure de l'appareil. Une durée typique est ainsi établie au cours d'essais préliminaires lors de la conception de l'appareil. En moyenne, elle est de l'ordre de 1 à 2 minutes.

Selon le second mode, la fin de la période finale est déterminée lorsque la température du pain atteint une seconde température prédéterminée appelée température d'arrêt Tf. Cette température Tf peut être choisie dans la gamme de températures allant de 180 °C à 200 °C environ. En effet, on a observé expérimentalement qu'un grillage satisfaisant du pain apparaissait dans cette gamme de températures, des températures supérieures pouvant conduire à une brûlure excessive du pain. Lorsque le capteur de température mesure cette température d'arrêt, les moyens 12 de détection délivrent un signal d'interruption Sf aux moyens 14 de temporisation. Ceux-ci délivrent en réponse un signal de coupure Cf aux moyens 11 de commande pour arrêter les moyens de chauffage.

La figure 4 indique que les moyens 12 de détection comportent des moyens de comparaison 27f qui reçoivent le signal $S_T$ délivré par le capteur 13 et qui comparent ce signal $S_T$ à une référence Ref2 correspondant à la température prédéterminée Tf. Les moyens de comparaison 27f délivrent le signal de commande Sf lorsque le signal $S_T$ est égal à la référence Ref2.

Selon le second mode, à l'apparition du premier signal de commande, les moyens de temporisation peuvent agir sur les moyens de commande pour modifier la puissance de chauffe des moyens de chauffage. Pour cela les moyens 14 de temporisation délivrent un signal Ca de changement d'allure de chauffe qui actionne les moyens 11 de commande pour réduire la puissance dissipée dans les moyens 17 de chauffage.

L'appareil pour griller peut être muni d'un commutateur 15 permettant de sélectionner l'un ou l'autre mode de sélection de l'arrêt de la période finale.

La figure 2 représente deux courbes relatives à deux tranches de pain ayant des températures initiales différentes. Par exemple, une température initiale Ti= 20 °C pour la tranche 1 et une température initiale Ti= -10 °C pour la tranche 2. En choisissant une température de démarrage Td égale à 100 °C, on observe que la tranche 1 arrive à 100 °C bien avant la tranche 2. En décomptant le temps à partir de l'instant initial où la tranche est soumise à l'action du rayonnement des moyens de chauffage, on observe aisément que si le processus de grillage était arrêté par exemple au temps t1, il le serait trop tardivement pour la tranche 1 (après Tf) et le serait trop prématurément pour la tranche 2 (avant Tf). Selon l'invention, les moyens de temporisation ne contrôlent le processus de grillage qu'à partir du moment où le pain a atteint la température de démarrage (Td). L'opération de grillage proprement dite peut alors se dérouler comme cela a été décrit précédemment durant les périodes finales Δt1 ou Δt2 pour chacune des tranches de pain. Dans le cas où c'est la température d'arrêt Tf qui limite le processus de grillage (figure 2), on observe que les durées Δt1 et Δt2 sont proches l'une de l'autre, indiquant que le processus de grillage est mieux maîtrisé qu'auparavant. Réciproquement, en fixant une durée de fonctionnement Δt déterminée, les températures obtenues en fin de période sont sensiblement identiques. Les courbes s'infléchissent légèrement en fin de grillage, montrant que la puissance de chauffage est réduite pour mieux contrôler les mécanismes de grillage.

Dans le cas d'un pain congelé, il est possible d'appliquer le principe de l'invention à la période de décongélation du pain. Lorsqu'à la mise en place du pain, le capteur de température détecte une température de pain inférieure à 0 °C, les moyens de détection 12 délivrent un signal de commande Sc, par exemple analogique, qui met en oeuvre un programme de décongélation. Les moyens de temporisation sont alors mis en route. Pour générer le signal Sc, on fait entrer le signal $S_T$ délivré par le capteur dans un troisième moyen de comparaison 27c qui reçoit également un signal de référence Ref3 correspondant à une température de référence de 0 °C. Le troisième moyen de comparaison 27c délivre le signal de comparaison Sc qui change de signe lorsque la température du pain franchit le seuil de 0 °C. Les opérations de modification de la puissance de chauffage peuvent être conduites comme cela a été exposé précédemment. La puissance de chauffage peut être modifiée pour accélérer la décongélation du pain. La fin de décongélation peut être établie soit lorsqu'une durée prédéterminée est atteinte, soit lorsqu'une température prédéterminée est atteinte. La durée prédéterminée par le programme de décongélation n'est pas critique. Elle est typiquement de l'ordre de 0,5 à 1 minute. La température prédéterminée peut être voisine de la température ambiante mais elle n'est nullement critique à condition d'être inférieure à 100 °C. Elle peut par exemple correspondre à une valeur déterminée du signal analogique Sc. A la fin de la décongélation, il y a mise en oeuvre automatique des étapes de grillage du pain précédemment décrites.

La figure 3 décrit la structure d'un capteur de température 13 opérant sans contact. Sur un substrat 30, peu conducteur thermiquement, par exemple en polyimide, est déposée une couche métallique 31, par exemple du constantan, sur laquelle sont disposés des plots d'une autre couche métallique 32, par exemple du cuivre. Les jonctions A, B à la transition entre le cuivre 32 et des évidements 36 à la surface du constantan 31 forment chacune un thermocouple. Une couche absorbante 33 assure l'absorption du rayonnement incident 40. En masquant de l'influence du rayonnement 40, par une couche réfléchissante 34, par exemple en or, (rayonnement réfléchi 41), alternativement une jonction sur deux, la jonction B par exemple, on met ainsi en série une suite de thermocouples dont les forces électromotrices s'additionnent pour développer une tension suffisante pour être aisément mesurable. La face arrière du substrat est conçue pour rester isotherme en cours d'utilisation. Le substrat 30 est déposé sur un support 35 bon conducteur, une lame de cuivre par exemple, pour assurer une uniformité de température de la face arrière du substrat 30 (face isotherme). Le capteur aura cependant une capacité calorifique faible.

Le capteur peut être muni d'un capteur supplémentaire de température 130, protégé du rayonnement direct, permettant de mesurer la température du substrat de laquelle on déduit la température des jonctions des thermocouples non exposés au rayonnement. Ce capteur de température supplémentaire peut être un thermocouple supplémentaire inclus dans le substrat ou un élément résistif, par exemple une résistance à coefficient négatif de température.

Préférentiellement, les moyens de détection 12 opèrent par détection d'un équilibre entre les flux échangés entre le capteur 13 et le produit 10 dont on mesure la température. Le principe de mesure est le suivant. Lorsque deux corps X et Y ayant respectivement des températures $T_X$ et $T_Y$ sont placés en regard l'un de l'autre, un échange thermique se produit. Ceci se traduit par un flux thermique qui s'exprime en fonction de la température par l'équation:

$$\Phi_r = F.f(\varepsilon_X, \varepsilon_Y) \cdot \sigma. S (T_X^4 - T_Y^4)$$

avec

$\Phi_r$ le flux résultant des échanges thermiques,
S les surfaces en regard,
$\sigma$ la constante de Stephan Boltzmann,
$\varepsilon_X$, $\varepsilon_Y$ les émissivités moyennes des surfaces en regard,
$f(\varepsilon_X, \varepsilon_Y) = 1/(1/\varepsilon_X + 1/\varepsilon_Y -1)$,
F un facteur de forme.

Connaissant la température $T_Y$, il est donc possible de déterminer la température $T_X$.

En mesurant la différence de température apparaissant entre la face exposée au rayonnement et la face arrière du capteur, on peut déduire la température du produit placé devant le capteur. La face arrière du capteur étant isotherme, la température de la face arrière est celle des jonctions froides (non exposées au rayonnement) disposées sur la face avant. La force électromotrice développée entre les jonctions chaudes et froides permet donc de mesurer la température du produit. Néanmoins, le flux échangé dépend des émissivités des surfaces en présence. Aussi, pour s'affranchir de l'influence de ces paramètres, préférentiellement les moyens de détection opèrent par annulation du flux thermique échangé. On détermine la température du produit à partir de cette annulation du flux thermique. Cette condition est obtenue en chauffant le capteur jusqu'à annuler la différence de température mesurée par les thermocouples. Par la mesure de la température du substrat, il est possible de connaître la température du produit. Dans ce cas la température de substrat du capteur est égale ou très proche de celle du produit, les émissivités des surfaces en regard n'intervenant plus dans cette mesure. La température du substrat est mesurée par le capteur 130.

Dans cette configuration, pour chauffer le substrat 35, celui-ci est muni d'une résistance chauffante $R_H$ dans laquelle on fait passer un courant électrique. La résistance $R_H$ peut être déposée par exemple sur la face arrière du substrat isotherme. Les moyens de détection 12 sont aptes à dissiper une énergie électrique dans la résistance de chauffage $R_H$.

La capacité calorifique du capteur 13 est suffisamment faible pour chauffer de cette manière le capteur plus rapidement que ne met le pain pour atteindre la température prédéterminée. On peut chauffer successivement et rapidement le capteur à des températures différentes, par exemple à 100 °C environ et à 180-200 °C environ. La faible capacité calorifique du capteur permet également à celui-ci de se refroidir suffisamment rapidement lorsque le chauffage est coupé afin qu'il redevienne opérationnel pour la tranche de pain suivante.

La mesure peut être effectuée de la manière suivante. La puissance électrique dissipée permet d'élever rapidement la température du substrat, mesurée par le capteur auxiliaire 130, jusqu'à la température prédéterminée choisie. Lorsque la température du pain augmente au cours du grillage, le signal $S_T$ délivré par le capteur 13 change et s'annule quand le produit atteint la température désirée, auquel cas il y a un équilibre de flux radiatif entre le pain et le capteur. Un signal de commande Sz est alors délivré par les moyens de détection 12. Pour cela, après que le substrat a atteint la température désirée prédéterminée (environ 100 °C ou environ 180-200 °C selon l'étape concernée), les moyens de détection déterminent quand le signal $S_T$ s'annule en comparant, dans un comparateur 27z, le signal $S_T$ à une référence Ref4 de valeur nulle. Le comparateur 27z permet de délivrer le signal de commande Sz lorsque $S_T$ est égal à Ref4. Pour cela, le comparateur est suivi d'une bascule 28z qui change d'état lorsque l'annulation du signal $S_T$ est détectée. Ce signal de commande Sz démarre les moyens de temporisation 14. A partir de cet instant, la température prédéterminée peut être modifiée jusqu'à la seconde valeur, par exemple 180 à 200 °C environ. Le comparateur 27z teste à nouveau l'annulation du signal $S_T$. Celle-ci se produit lorsque le pain atteint cette seconde température prédéterminée. Le comparateur 27z change à nouveau l'état de la bascule 28z, ce qui arrête les moyens de temporisation 14.

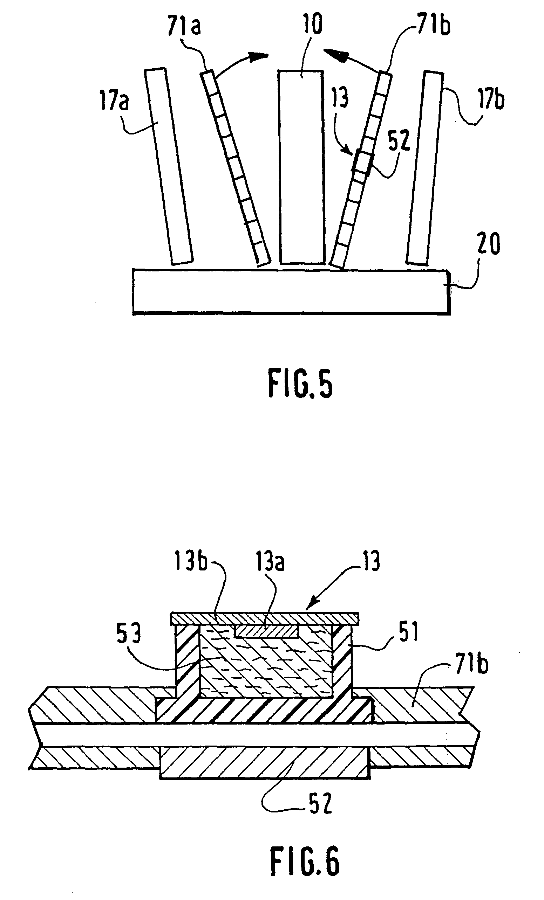

D'autres types de capteurs de température peuvent être utilisés, notamment des capteurs de température sans contact comme des bolomètres ou des capteurs de température qui sont mis en contact avec le produit. La figure 5 représente un exemple de réalisation comportant un capteur de ce dernier type. Cette figure montre schématiquement un grille-pain ayant des grilles de maintien 71a, 71b qui sont articulées, par rapport à une embase 20, pour pouvoir se rapprocher du pain à griller 10. L'une des grilles 71b comporte un capteur 13 de température qui vient en contact avec le pain lorsque les grilles ont été rapprochées. Des éléments chauffants 17a, 17b, éventuellement articulés, permettent de griller le pain à travers les grilles 71a, 71b.

Préférentiellement le capteur de température est un capteur de surface (figure 6). Il est recommandé qu'il ait une faible capacité calorifique et de petites dimensions pour ne pas masquer le grillage du pain. Le capteur de température 13 peut être protégé par un écran 52 pour lui éviter de recevoir le rayonnement direct issu des éléments chauffants. Pour l'isoler thermiquement de la grille d'application, il peut être placé dans un support isolant 51, par exemple en téflon ou en matériau composite peu conducteur de la chaleur. Un feutre 53 ou une mousse isolante pour haute température, placé entre l'élément sensible et le support, peut compléter cette isolation. Le capteur peut être un thermocouple à film mince ou un bolomètre 13a déposé sur un film polymère (par exemple en polyimide) ou sur une céramique mince 13b mais résistante mécaniquement. Comme précédemment, le capteur de température fait partie de moyens de détection qui délivrent la température du pain.

## Revendications

**1.** Appareil (5) pour griller un produit (10) comportant:

- des moyens de chauffage (17),
- des moyens de commande (11) pour commander les moyens de chauffage,
- des moyens de temporisation (14) pour opérer un contrôle temporaire des moyens de commande,
- des moyens de détection (12) pour suivre des variations d'un état de grillé du produit en cours de grillage et pour délivrer au moins un signal de commande actionnant les moyens de temporisation lorsqu'au moins un seuil d'état de grillé est atteint **caractérisé en ce que** les moyens de détection (12) comportent un capteur (13) de température qui mesure une température du produit, les moyens de détection comportant un premier moyen de comparaison (27d) pour délivrer un premier signal de commande (Sd) mettant en route les moyens de temporisation lorsque la température du produit est supérieure à une température prédéterminée (Td) déterminant un premier seuil d'état de grillé.

**2.** Appareil selon la revendication 1 **caractérisé en ce que** les moyens de détection comportent un second moyen de comparaison (27f) pour délivrer un second signal de commande (Sf) lorsque la température du produit atteint une seconde température prédéterminée (Tf) déterminant un second seuil d'état de grillé, les moyens de temporisation délivrant aux moyens de commande, d'une part, un signal (Ca) de changement d'allure de chauffe en réponse au premier signal de commande et, d'autre part, un signal (Cf) de coupure en réponse au second signal de commande (Sf) pour arrêter les moyens de chauffage.

**3.** Appareil selon la revendication 1 **caractérisé en ce que** les moyens de temporisation (14) comportent un compteur (19), enclenché par le premier signal de commande (Sd), le compteur mesurant une durée de contrôle temporaire, les moyens de temporisation délivrant aux moyens de commande (11) un signal de coupure (Cf) lorsque la durée de contrôle temporaire a atteint un durée prédéterminée déterminant la fin du grillage.

**4.** Appareil selon la revendication 1 **caractérisé en ce que** la température prédéterminée déterminant le premier seuil d'état de grillé est légèrement supérieure à 100 °C.

**5.** Appareil selon la revendication 2 **caractérisé en ce que** la température prédéterminée déterminant le second seuil d'état de grillé est située dans une gamme de températures allant de 180 °C à 200 °C environ.

**6.** Appareil selon la revendication 3 **caractérisé en ce que** les moyens de temporisation comportent des moyens de réglage (18) permettant à un utilisateur de régler la durée prédéterminée de contrôle temporaire.

**7.** Appareil selon la revendication 1 **caractérisé en ce qu'**en réponse au premier signal de commande, les moyens de temporisation délivrent, aux moyens de commande, un signal de changement d'allure de chauffe.

**8.** Appareil selon la revendication 1 **caractérisé en ce que** les moyens de détection comportent un troisième moyen de comparaison (27c) pour délivrer un troisième signal de commande (Sc) présentant deux états de manière à contrôler une décongélation du produit, les moyens de temporisation étant tels qu'ils sont mis en route par le premier état lorsque la température du produit est inférieure à 0 °C et sont tels qu'ils sont arrêtés par le second état lorsque la température du produit est au-delà de 0°C.

**9.** Appareil selon la revendication 1 **caractérisé en ce que** les moyens de détection comportent un troisième moyen de comparaison (27c) pour délivrer un troisième signal de commande (Sc) lorsque la température du produit est inférieure à 0 °C, les moyens de temporisation étant tels qu'ils sont mis en route par le troisième signal de commande et étant tels qu'ils sont arrêtés après une durée prédéterminée.

**10.** Appareil selon la revendication 1 **caractérisé en ce que** le capteur de température est un capteur mesurant sans contact un rayonnement infra-rouge émis par le produit.

**11.** Appareil selon la revendication 10 **caractérisé en ce que** les moyens de détection (12) comportent un quatrième moyen de comparaison (27z) pour déterminer la température du produit en détectant un équilibre dans les flux échangés entre le capteur (13) de température et le produit (10).

**Patentansprüche**

**1.** Gerät (5) zum Grillen (10) eines Produktes mit:

- Heizverfahren (17),
- Steuerverfahren (11), um die Heizverfahren zu steuern,
- Verzögerungsverfahren (14) zum Ausüben einer zeitweiligen Kontrolle auf die Steuerverfahren,
- Abtastverfahren (12) zum Verfolgen der Röstvariationen beim Röstvorgang und zum Abgeben mindestens eines Steuersignals zum Einleiten der Verzögerungsverfahren, wenn eine Röstschwelle erreicht wurde, **dadurch gekennzeichnet, dass** die Abtastverfahren (12) einen Temperaturtaster (13) enthalten, der eine Temperatur des Produktes misst, wobei die Abtastverfahren ein erstes Vergleichsverfahren (27d) aufweisen, um ein erstes Steuersignal (Sd) abzugeben, das die Verzögerungsverfahren einschaltet, wenn die Temperatur des Produktes über einer vorbestimmten Temperatur (Td) liegt, die eine erste Röstschwelle bildet.

**2.** Gerät nach Anspruch 1, **dadurch gekennzeichnet, dass** die Abtastverfahren ein zweites Vergleichsverfahren (27f) enthalten, um ein zweites Steuersignal (Sf) abzugeben, wenn die Temperatur des Produktes eine zweite vorbestimmte Temperatur (Tf) erreicht hat, die eine zweite Röstschwelle festlegt, wobei die Verzögerungsverfahren den Steuerverfahren einerseits ein Signal (Ca) zum Ändern der Heizleistung in Beantwortung des ersten Steuersignals und andererseits ein Unterbrechungssignal (Cf) in Beantwortung des zweiten Steuersignals (Sf) übermitteln, um die Heizverfahren zu unterbrechen.

**3.** Gerät nach Anspruch 1, **dadurch gekennzeichnet, dass** die Verzögerungsverfahren (14) einen Zähler (19) enthalten, der vom ersten Steuersignal (Sd) ausgelöst wird, wobei der Zähler die Dauer der zeitweiligen Kontrolle misst und die Verzögerungsverfahren den Steuerverfahren (11) ein Unterbrechungssignal (Cf) übersenden, wenn die zeitweilige Kontrolle die zum Beenden des Röstvorgangs vorbestimmte Zeitdauer erreicht hat.

**4.** Gerät nach Anspruch 1, **dadurch gekennzeichnet,**

**dass** die vorbestimmte Temperatur zum Festlegen der ersten Röstzustandsschwelle leicht über 100 °C liegt.

5. Gerät nach Anspruch 2, **dadurch gekennzeichnet, dass** die vorbestimmte Temperatur zum Festlegen der zweiten Röstzustandsschwelle in einem von 180 °C bis 200 °C reichenden Temperaturbereich liegt.

6. Gerät nach Anspruch 3, **dadurch gekennzeichnet, dass** die Verzögerungsverfahren Einstellverfahren (18) aufweisen, die es dem Anwender ermöglichen, die vorbestimmte Dauer der vorübergehenden Kontrolle einzustellen

7. Gerät nach Anspruch 1, **dadurch gekennzeichnet, dass** die Verzögerungsverfahren in Beantwortung eines ersten Steuersignals den Steuerverfahren ein Signal zum Ändern der Heizleistung übermitteln.

8. Gerät nach Anspruch 1, **dadurch gekennzeichnet, dass** die Abtastverfahren ein drittes Vergleichsverfahren (27c) enthalten, um ein drittes Steuersignal (Sc) abzugeben, das zwei Zustände kennt, um das Auftauen des Produktes zu kontrollieren, wobei die Verzögerungsverfahren derart sind, um vom ersten Zustand eingeschaltet zu werden, wenn die Temperatur des Produktes unter 0 °C liegt, und derart, um vom zweiten Zustand unterbrochen zu werden, wenn die Temperatur des Produktes über 0 °C liegt.

9. Gerät nach Anspruch 1, **dadurch gekennzeichnet, dass** die Abtastverfahren ein drittes Vergleichsverfahren (27c) enthalten, um ein drittes Steuersignal (Sc) abzugeben, wenn die Temperatur des Produktes unter 0 °C liegt, wobei die Verzögerungsverfahren derart sind, um vom dritten Steuersignal eingeschaltet zu werden, und derart, um nach einer vorbestimmten Zeitdauer unterbrochen zu werden.

10. Gerät nach Anspruch 1, **dadurch gekennzeichnet, dass** der Temperaturtaster ein kontaktloser, eine von Produkt ausgehende Infrarotstrahlung messender Taster ist.

11. Gerät nach Anspruch 10, **dadurch gekennzeichnet, dass** die Abtastverfahren (12) ein viertes Vergleichsverfahren (27z) aufweisen, um die Temperatur des Produktes über den durchschnittlich zwischen dem Taster (13) und dem zu röstenden Produkt (10) stattfindenden Strahlungaustausch zu bestimmten.

**Claims**

1. An appliance (5) for toasting a product (10), comprising:

- heating means (17),
- control means (11) for controlling the heating means,
- timing means (14) to provide time control of the control means,
- detection means (12) for detecting variations of a toasting condition of the product during toasting and for supplying at least one control signal which activates the timing means when at least one toasting condition threshold is reached, **characterized in that** the detection means (12) comprise a temperature sensor (13) which measures a temperature of the product, the detection means comprising a first comparison means (27d) for supplying a first control signal (Sd) which starts the timing means when the temperature of the product is higher than a predetermined temperature (Td) which defines a first toasting condition threshold.

2. An appliance as claimed in Claim 1, **characterized in that** the detection means comprise a second comparison means (27f) for supplying a second control signal (Sf) when the temperature of the product reaches a second predetermined temperature (Tf) which defines a second toasting condition threshold, the timing means being responsive to the first control signal to supply a heating-characteristic change signal (Ca) to the control means and being responsive to the second control signal (Sf) to supply a turn-off signal (Cf) to said control means in order to turn off the heating means.

3. An appliance as claimed in Claim 1, **characterized in that** the timing means (14) comprise a counter (19), triggered by the first control signal (Sd), which counter measures a time control period, the timing means supplying a turn-off signal (Cf) to the control means (11) when the time control period has reached a predetermined length defining the end of toasting.

4. An appliance as claimed in Claim 1, **characterized in that** the predetermined temperature defining the first toasting condition threshold is slightly higher than 100 °C.

5. An appliance as claimed in Claim 2, **characterized in that** the predetermined temperature defining the second toasting condition threshold lies in a range of temperatures from approximately 180 °C to 200 °C.

6. An appliance as claimed in Claim 3, **characterized in that** the timing means comprise setting means (18) enabling a user to set the predetermined time-control period.

7.  An appliance as claimed in Claim 1, **characterized in that** the timing means are responsive to the first control signal to supply a heating-characteristic change signal to the control means.

8.  An appliance as claimed in Claim 1, **characterized in that** the detection means comprise a third comparison means (27c) for supplying a third control signal (Sc) having two states so as to control a process of defrosting the product, the timing means being such that they are started by the first state when the temperature of the product is lower than 0 °C and are stopped by the second state when the temperature of the product is over 0 °C.

9.  An appliance as claimed in Claim 1, **characterized in that** the detection means comprise a third comparison means (27c) for supplying a third control signal (Sc) when the temperature of the product is lower than 0 °C, the timing means being such that they are started by the third control signal and are stopped after a predetermined period.

10. An appliance as claimed in Claim 1, **characterized in that** the temperature sensor is a sensor which without mechanical contact measures infrared radiation emitted by the product.

11. An appliance as claimed in Claim 10, **characterized in that** the detection means (12) comprise a fourth comparison means (27z) for determining the temperature of the product by detecting an equilibrium in the fluxes exchanged between the temperature sensor (13) and the product (10).

FIG.1

FIG.2

**FIG.3**

**FIG.4**

FIG.5

FIG.6